# EUROPEAN PATENT SPECIFICATION

(11) **EP 2 776 610 B1**
(45) Date of publication and mention of the grant of the patent: **23.05.2018**
(21) Application number: 12783612.0
(22) Date of filing: 09.11.2012
(51) Int. Cl.: C25C 3/20, G01S 5/16, C25C 3/08

(54) **METHOD FOR MEASURING SURFACE PROFILES IN WORKING ALUMINIUM ELECTROLYSIS CELLS**
VERFAHREN ZUR MESSUNG VON OBERFLÄCHENPROFILEN BEI FUNKTIONIERENDEN ALUMINIUMELEKTROLYSEZELLEN
PROCÉDÉ DE MESURE DE PROFILS DE SURFACE DE CELLULES D'ÉLECTROLYSE DE L'ALUMINIUM EN FONCTIONNEMENT

(30) Priority: 11.11.2011 EP 11188899
(43) Date of publication of application: 17.09.2014
(73) Proprietor: SGL CFL CE GmbH, 86405 Meitingen (DE)
(72) Inventor: PACHARZYNA, Rafal, PL-47-400 Raciborz (PL); ORACZ, Tomasz, PL-33-300 Nowy Sacz (PL)
(86) International application number: PCT/EP2012/072318
(87) International publication number: WO 2013/068558

(56) References cited:
- EP-A1- 0 829 701
- EP-A1- 1 531 194
- EP-B1- 0 880 674
- DE-C1- 10 245 320
- Asbjørn Solheim ET AL: "SIDELEDGE IN ALUMINIUM CELLS: THE TRENCH AT THE METAL-BATH BOUNDARY", Light Metals, 2009, XP55064260, Retrieved from the Internet: URL:http://my.alacd.com/tms/2009/Aluminum Reduction Technology/0411.pdf [retrieved on 2013-05-27]
- HILTMANN F ET AL: "Laboratory test method for measuring wear rates of carbon cathode materials", COMPENDEX, 2003, XP002284665,

## Description

The present invention relates to an apparatus for measuring surface profiles, in particular the cathode wear profile and the side ledge(s) profile, in aluminium electrolysis cells and to a method of measuring such surface profiles in aluminium electrolysis cells.

Such electrolysis cells are employed for electrolytically producing aluminium, especially according to the Hall-Heroult-process. With the Hall-Heroult-process a melt containing alumina and cryolite is electrolyzed. Cryolite acts for lowering the melting point of 2045 °C of pure alumina to about 950°C for a mixture containing cryolite, alumina and additives, such as aluminium fluoride and calcium fluoride.

The electrolysis cell employed for this method comprises a cell bottom which is built up of a plurality of adjacent cathode blocks forming the cathode. It is to be understood that seams between the adjacent cathode blocks as well as peripheral seams between the cathode blocks and the sidewalls of the cell are also considered as part of the cathode. To withstand the thermal and chemical conditions in a working cell, the cathode blocks usually are comprised of a carbon-containing material. On the bottom side of the cathode blocks grooves are provided in which at least one current collector is arranged through which the current is conducted that is provided through the anodes. Some 3 to 5 cm above the layer of molten aluminium present above the cathode top side an anode consisting of single anode blocks is provided. Between the anode and the surface of the aluminium, the electrolyte melt is present which contains alumina and cryolite.

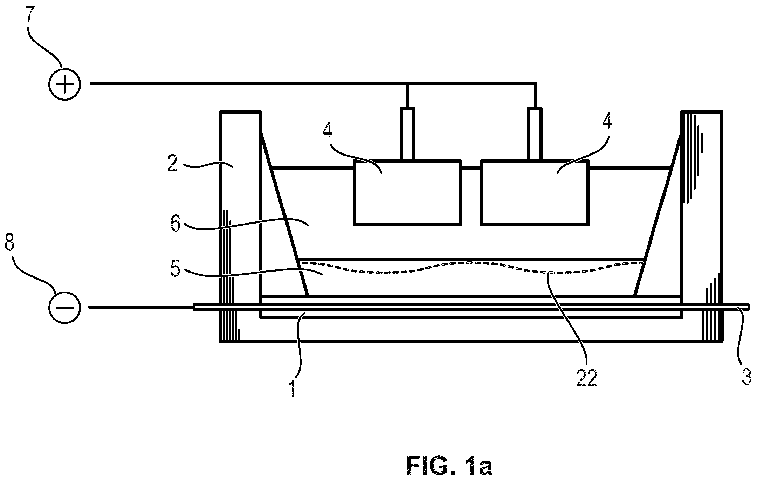

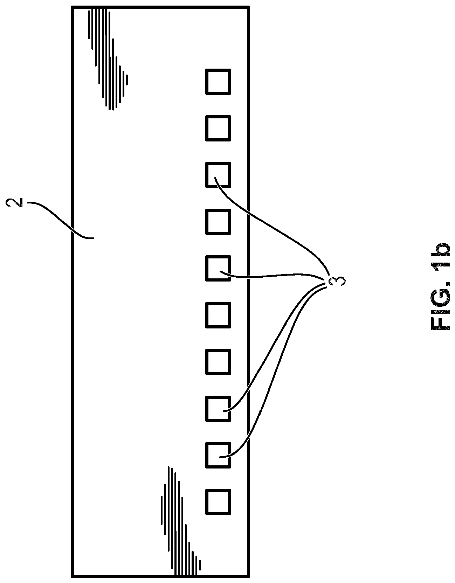

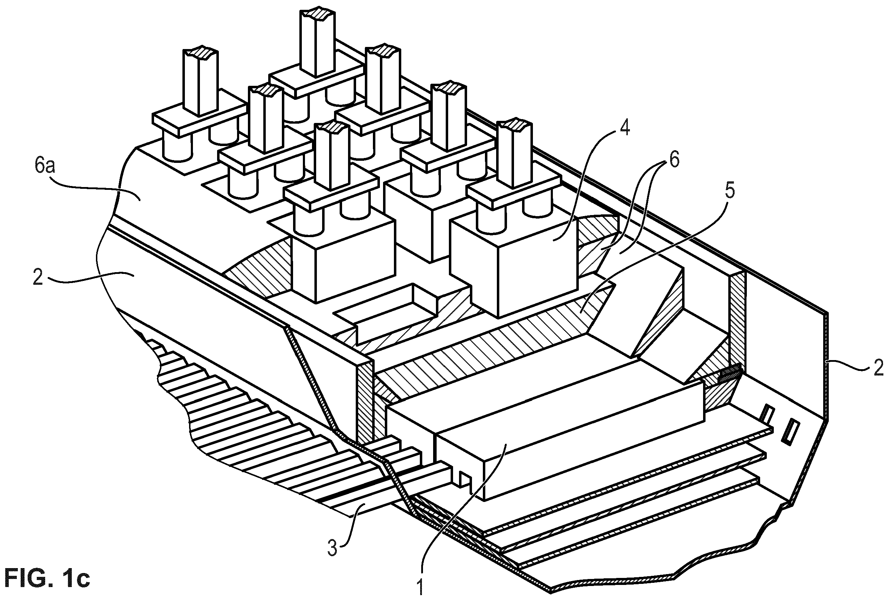

The principal design of an electrolysis cell for the Hall-Heroult-process is shown schematically in Figs. 1a to 1c. Fig. 1a illustrates a cross-section of a conventional cell, Fig. 1b is a side view of the cell and Fig. 1c is a perspective view of an electrolysis cell.

Reference sign 1 denotes a cathode which can for example be composed of graphite, anthracite or a mixture of those. Alternatively, graphitized cathodes on the basis of coke can be employed. Cathode 1 usually is incorporated into a steel-type or refractory-type mounting 2. Cathode 1 can be of one piece or alternatively be composed of a plurality of single cathode blocks.

Along the length of the cell a plurality of current collectors 3 is introduced into cathode 1, Fig. 1a showing only one single current collector 3. In Fig. 1c it is made visible that for each cathode block e.g. two current collectors can be provided. The purpose of the current collectors is to supply to the cell current necessary for the process of electrolysis. Opposite to the cathode 1 several typically prismatic anodes 4 are provided, Fig. 1a schematically depicting two anodes 4. Fig. 1c shows the arrangement of the anodes in an electrolysis cell in more detail. During electrolysis by applying a voltage between cathode 1 and anodes 4 the alumina which is solved in cryolite is dissociated to aluminium ions and oxygen ions. The aluminium ions move towards the molten aluminium - which from an electrochemical point of view is the actual cathode - to collect electrons. Due to its higher density the aluminium 5 enriches below the molten mixture 6 of alumina and cryolite in the liquid phase. The oxygen ions are reduced to oxygen at the anode, the oxygen reacting with the carbon of the anodes. Reference number 6a denotes the crust of solidifying molten mixture 6 and, if this crust is at the cell sides it is called side ledge.

Reference number 7 and 8 denote the schematically depicted negative and positive poles of a power supply for supplying voltage necessary for the process of electrolysis, the value of which ranges between 3.5 and 5 V for example.

As shown in the side view of Fig. 1b, the mounting 2 and thus the whole electrolysis cell exhibits an elongate shape, a plurality of current collectors 3 being introduced perpendicularly through the sidewalls of the mounting 2. Typically, the longitudinal extension of cells presently in service is between 8 and 15 m, the lateral extension being about 3 to 5 m. A cathode as shown in Fig 1a is disclosed in EP 1845174 for example.

One disadvantage of the Hall-Heroult-process is the high demand for energy. For producing 1 kg of aluminium 12 to 15 kWh are necessary, which constitutes up to 40 % of the production costs. For lowering the production costs it is desired to reduce the specific power consumption as far as possible.

One parameter, which is essential for the power efficiency, is the distance between the surfaces of the anodes and the liquid aluminium in the electrolysis cell. The anode or anodes, respectively, need to be disposed in a distance to the surface of the aluminium which is sufficient to prevent a short circuit between the anodes and the cathode blocks through the aluminium. Theoretically, the anodes can be moved very closely towards the surface of the liquid aluminium, if the aluminium surface is smooth. Due to high currents introduced into the cathode during electrolysis, however, electro-magnetic fields are generated, which due to their interaction induce flow and wave movement into the liquid aluminium. These wave movements cause locally increased wear of the cathode, thus shortening the life-time of the whole electrolysis cell. This mechanical wear takes place by the molten aluminium, the electrolyte and alumina particles present in the hot mixture abrading the bottom of the cell which is the top of the cathode. Furthermore, the cathode is worn due to electrochemical processes which take place in the presence of high density electrical current. Particularly, the cathode is corroded by the reaction of the carbon in the cathode to aluminium carbide. Usually a typical "W-shaped" wear profile arises by the inhomogeneous wear. Such a wear lowers the energy efficiency of the cell, since the distance between liquid aluminium and anode increases.

Presently, the wear profile is determined during a so-called "autopsy" after shutting the cell down at the end of the cell's life-time. For making predictions of the life-time of an electrolysis cell, however, it is desired to have information about the actual state of the cell in terms of its wear profile while the electrolysis cell is in service.

There have been several attempts to determine surface positions of the cathode and thus to determine the wear profile in the working cell, i.e. with a liquid mixture of aluminium and cryolite above the cathode. Common measurement methods that are usually used in liquids, such as echo and shade methods with the help of ultrasonic waves cannot be employed due to the imperviousness of liquid aluminium to ultrasound. Also, it is not possible to directly contact the surface of the cathode with a measurement device due to the high temperatures of the melt of about 1000 °C. For instance, DE 102 45 320 C1 discloses a laboratory scale method to measure volumes of chemically-eroded carbon of carbon cathodes. Therefore, mechanical methods have been used to estimate the cathode wear profile. For this purpose, anode blocks are removed and the cathode surface is touched directly by a rod that is immersed in to the melt. By the length of the rod that projects above the melt level, the cathode wear is estimated. The disadvantage of this approach is that the determined depth has low accuracy and that the position of the rod within the plane of the cell is not determined, but only estimated. It is not possible to determine an exact wear profile, but rather merely maximum and minimum depth values without their exact distribution.

It is, therefore, an object of the invention to overcome the disadvantages mentioned above and to provide a fast and accurate method to locally determine the surface profile in electrolysis cells and thus an exact wear profile and, to locally determine the of side ledge(s) surface profile in electrolysis cells and to provide an apparatus for performing this method.

It is to be understood that the term "surface profile" comprises the surface profile of cathodes, the surface profile of side walls and the surface profile of side ledges.

According to the present invention, this object is achieved by an apparatus for determining surface profiles, in particular the cathode wear profile and the side ledge(s) profile, of an aluminium electrolysis cell, which is filled with an aluminium melt and has side ledges, comprising a position determining system with a mobile system member and a stationary system member and a lance with a heat resistant lance tip for immersing into the melt onto cathode or side ledge surface of the cell, the mobile member being attached to the lance and the stationary member being adapted for determining a position of the lance tip by determining a position of the mobile member.

The apparatus according to the invention for the first time enables accurate measurements of the cathode surface and the position of a side ledge of an electrolysis cell that is in service. By separating the position at which the measurement actually is performed, i.e. the position of the mobile member, and the point, whose position is determined, it becomes possible to employ temperature sensitive equipment. The high temperatures of about 1000 °C do not influence the measurement, because the mobile member and the stationary member are disposed at a distance from the melt. Furthermore, with the apparatus very fast measurements are possible. This is advantageous, if the anode block has to be removed for conducting measurements in the cell. The high speed measurements allow for the thermal balance in the electrolysis cell not to be influenced.

Preferably, the lance tip comprises or is at least essentially made of a material which can withstand higher temperatures than a shaft of the lance or at least the same temperatures as the shaft. This is advantageous, since the lance tip itself is immersed into the melt or the side ledge, whereas the shaft is held above the melt or the side ledge during measurements of the cell. Thus, the shaft does not need to be constructed of a material of such high quality in terms of temperature and corrosion resistance and accordingly a material, which is less expensive, can be chosen for the shaft.

According to particularly preferred embodiment, the lance tip comprises or is at least essentially made of steel, particularly stainless steel, or a graphite-based material. It has been observed that the melt, especially the cryolite, is chemically very aggressive towards many materials. Especially steel which is stainless can withstand this environment easily. The same applies for graphite-based material. Other preferred materials for the lance tip are titanium alloys and ceramics, such as oxide or nitride ceramics.

Preferably, the shaft of the lance comprises or is at least essentially made of steel, particularly stainless steel. Although the shaft is not in direct contact with the melt or the side ledge it is placed adjacent to the melt or the side ledge so that it is advantageous to be resistant towards the hot mixture as well. Furthermore, steel has a relatively high stiffness which raises the accuracy of measurement. Alternatively, also the shaft is constructed of a graphite-based material and/or of carbon-fiber reinforced material.

The graphite-based material can advantageously comprise at least one material of the group consisting of carbon, graphite or semi-graphite. The carbon-fiber reinforced material can advantageously comprise at least one material of the group consisting of carbon-fiber reinforced ceramic or carbon-fiber reinforced carbon.

According to a preferred embodiment of the present invention the lance tip comprises a ball end. A ball end has the advantage of a round shape which does not damage the surface of the cathode when performing the measurement. The ball end may be a separate part that is fixed to the lance tip. Fixing may be performed by welding. Alternatively, the ball end may be a round-shaped integral end of the lance tip itself.

According to a preferred embodiment of the invention the shaft and the lance tip are joined by reversible joints, such as threads. Alternative the joints may be irreversible joints, such as welding joints.

According to a preferred embodiment of the invention the length of the lance tip is at least as long as the depth of the melt above the cathode or the depth of the side ledge, the surface of which is to be measured. The length is preferably at least 50 cm and more preferably at least 70 cm, most preferably between 80 and 100 cm.

According to another preferred embodiment the shaft and/or the lance tip comprises a pipe. A pipe has about the same stiffness as massive material, but is lighter so that the handling of the apparatus for measurement is easier. Furthermore, a pipe stores and conducts less heat than massive material which can also contribute to easier handling at high temperatures.

According to another particularly preferred embodiment the mobile member is attached reversible to the lance. This supports fast change of the lance in case the shaft and/or the lance tip are damaged and need to be replaced.

Furthermore, it is preferred that the position determining system is adapted to determine the position of the lance tip and/or ball end by determining positions of reference points on the mobile member and calculating the position of the lance tip and/or ball end on the basis of the positions of the reference points. With such a system it is possible that the mobile member itself only provides reference points without itself carrying equipment for measurement. Thus, it becomes possible that the mobile member is very robust and insensitive toward heat and corrosion from the hot mixture in the aluminium electrolysis cell. Furthermore, such a position determining systems avoids problems usually occurring with sensible measurement equipment above or close to the strong electromagnetic fields generated by the high currents flowing to and through the cathode. By separating the stationary member that is placed at a distance from the cell from the positions of reference points on the mobile member that is placed above the cathode, problems occurring due to the electromagnetic fields can circumvented according to the invention.

According to still another preferred embodiment, the stationary member and the mobile member are adapted to determine the position of the reference points with the help of optical means. This can for example mean that the reference points themselves are light-sources which emit light that can be sensed by parts of the stationary member, such as cameras and other light-sensitive means. The received signals can be computed by a computation device that determines the positions of the reference points. As an alternative, the reference points can be mirrors that reflect light emitted by an additional light source.

For example, in EP 0829701 B1, EP 0700506B1 and EP 0880674B1 exact procedures for determining positions of reference points on a mobile member of a position determining system with the help of a stationary member are disclosed, their content being related to these procedures being incorporated herewith by reference.

All kinds of light are appropriate for the present application. In a preferred embodiment, infrared light is emitted by IR-light emitting diodes placed on the mobile member as reference points.

The determination of the position by the help of optical means has the advantage that no moving part for the position determining system is necessary. Thus, the position determining system is not prone to mechanical wear or failure.

Since the computation is performed in the stationary member, the mobile member which is closer to the hot melt can be designed very simple and thus very robust. Essentially, the mobile member can be constructed of a body and the reference points. The body can be based on aluminium for example which is light-weight and has a high stiffness. The mobile member being arranged at the end of the lance remote from the lance tip and thus remote from the hot melt during measurement, the temperature acting on the mobile member is relatively low so that aluminium does not melt.

Furthermore, the object of the invention is achieved by a method for determining surface profiles, in particular the cathode wear profile and the side ledge(s) profile, in an aluminium electrolysis cell by employing an apparatus according to the invention, immersing the lance tip of the apparatus into the aluminium melt onto cathode or side ledge surface of the cell and determining the position of the tip as the height of the cathode or of the side ledge at this position in the cell.

According to a preferred embodiment of the invention, an anode block covering a segment of the cell to be measured is removed before immersing the lance tip into the cell. The advantage is that the cell continues to work with just one anode block being removed. The cell does not have to be shut down for measurements of the wear profile.

Preferably, several anode blocks are removed and the respective segments are measured with the method according to the invention. This gives the possibility to obtain a wear profile of larger regions of the cell.

According to a particularly preferred method, a wear profile of the cathode is determined by providing the measurements of the single segments to one complete cell profile.

According to another preferred embodiment, only some segments of the cell are measured and the profile of the complete cell is calculated by estimating/extrapolating the residual segments.

According to a particularly preferred embodiment, half of the cell segments or a quarter of the cell segments is measured. Due to high symmetry of the conventional aluminium electrolysis cell, a quarter or half of the wear profile of a cell can easily be transferred to an estimated complete wear profile.

Expressly, the present invention also covers the case in which the aluminium electrolysis cell is not filled with an aluminium melt. In this case the cathode can be reached without immersing into a melt or hot mixture. For this purpose, either a lance is attached to the mobile member as described above or the mobile member is employed without a lance. In the latter case a leg of the mobile member has the same function as the lance. All other features of the apparatus and method according to the invention mentioned in the description, the claims and the figures may apply to this alternative. In general the invention relates to an apparatus for determining the surface profiles, in particular the cathode wear profile or the side ledge(s) profile, of an aluminium electrolysis cell comprising a position determining system with a mobile system member and a stationary system member and a lance with a lance tip for contacting the cathode or the side wall or the side ledge of the cell, the mobile member being attached to the lance and the stationary member being adapted for determining a position of the lance tip by determining a position of the mobile member the lance being a leg of the mobile member or an additional lance.

Furthermore, the invention relates in general to a method for determining the surface profile, in particular the cathode wear profile or the side ledge(s) profile, in an aluminium electrolysis cell by employing an apparatus as mentioned above touching the cathode or the side wall or the side ledge with the lance tip of the apparatus and determining the position of the lance tip as the height of the cathode or of the side wall or side ledge at this position in the cell.

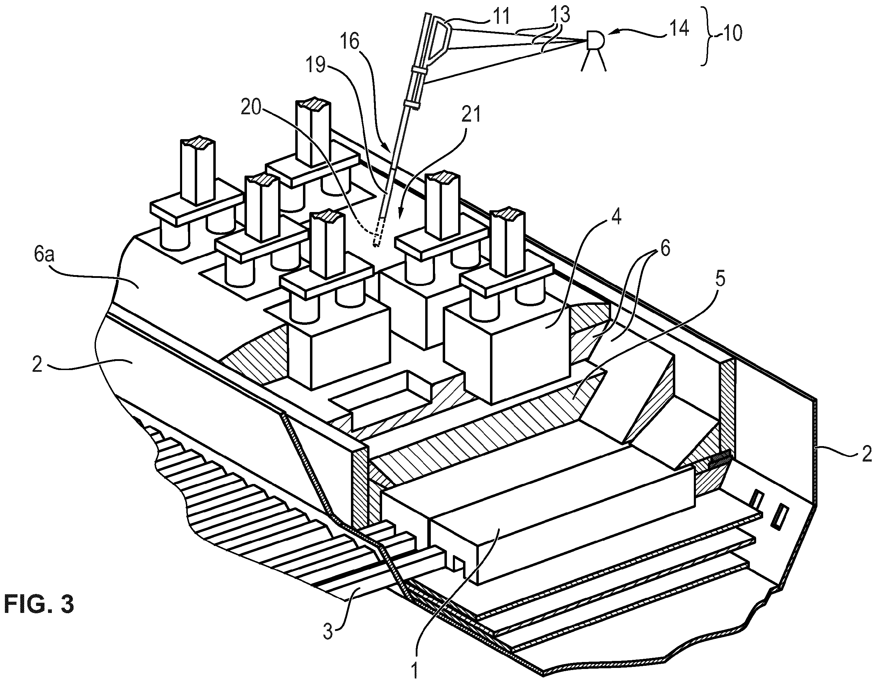

In the following the present invention will be described in more detail by way of a non-limiting example with the help of Figs. 1a to 3, the figures showing
Fig. 1a: a cross-section of a prior art aluminium electrolysis cell,
Fig. 1b: the cell according to Fig. 1a in a longitudinal section,
Fig. 1c: a perspective view of an aluminium electrolysis cell
Fig. 2: a schematic sketch of the apparatus according to the invention
Fig. 3: a prior art cell according to Fig. 1c, one anode block being removed and an apparatus according to the invention being immersed into the cell.

Figs. 1a to 1c depict an aluminium electrolysis cell as already described above.

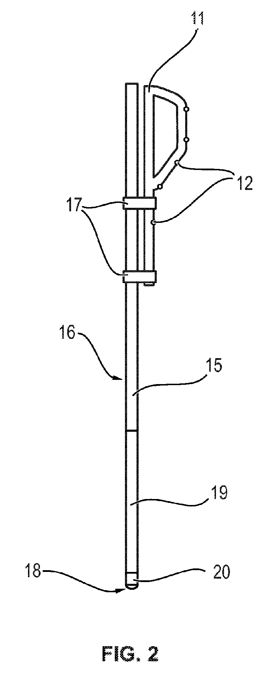

To determine the wear of the cathode in such a prior art cell, an apparatus according to the invention is employed. The apparatus 10 comprises a mobile system member 11 in the shape of a light pen as shown in Fig. 2. The light pen 11 comprises a number of light emitting diodes 12 that emit light 13, which can be detected by a stationary member 14 of the position determining system. The light pen 11 is attached to a stainless steel pipe 15 which is a shaft of the lance 16 by clamping it to the pipe 15 with steel bands 17. The clamping is carried out with the help of screws that close steel sleeves 17 into which the light pen 11 is inserted. In Fig. 2 only the sleeves as 17 the clamping means are indicated.

At the end 18 of the lance 16 which is remote from the light pen 11, a lance tip 19 is arranged to the lance 16. The lance tip 19 has a ball end 20 welded to it. In this embodiment both shaft 15 and lance tip 19, as well as the ball end 20 are made from stainless steel. In this example, type AISI 52100 is used as stainless steel. It exhibits much higher resistance against the aggressive cryolite in the melt of the aluminium electrolysis cell than conventional steel does. Alternatively, the shaft 15 which does not need to withstand such high temperatures as the lance tip 19 and the ball end 20 can be constructed of a fiber-reinforced material such as carbonfiber-reinforced polymer. Furthermore, the shaft 15 and particularly preferred the lance tip 19, as well as the ball end 20 can be constructed of carbonfiber-reinforced carbon or carbonfiber-reinforced ceramic. These materials combine light weight and high temperature resistance.

The total length of the lance 16 in this example is 2.3 meter, the lance tip 19 having a length of about 1 meter. The shaft 15 is a pipe of 20 mm outer diameter and the lance tip 19 has a diameter of 20 mm as well.

Before starting the measurement, the position determining system is calibrated. For this purpose at a certain calibration position beside the electrolysis cell, the ball end 20 of the lance tip 19 is placed. IR-light emitting diodes as reference points 12 on the light pen as mobile member 11 of the position determining system emit light 13. This light 13 is registered by one or more cameras as part of the stationary member 14 of the position determining system and passed to a computation member of the stationary member (not shown). This procedure is repeated for the lance 16 being held in different angles, but with the ball end always in the same position. This way, the position determining system recognizes the length of the lance 16 and is calibrated to determine the position of the ball end 20 just from knowing the position of the reference points 12.

Subsequently, one anode block 4 is removed from the cell and the melt 5, 6, 6a is uncovered in this segment 21. The lance tip 19 is immersed into the melt 5, 6, 6a until the ball end 20 is stopped by the surface of the cathode 1. By determining the position of the reference points 12 of the light pen 11 by the stationary member 14, the three-dimensional position of the ball end 20 is determined. The position of the ball end 20 corresponds to the height of the cathode put in relation to its position within the plane of the cathode 1.

According to this method, a plurality of points in the segment 21 uncovered by removing the anode block 4 is determined. In this example, the anode block 4 is removed because of its regular oxidation which occurs under normal operational conditions of the cell, but the cell continues to work. After about 10 to 30 minutes a new anode block 4 is arranged at the segment 21 of the removed anode bock 4 due to energy and efficiency reasons. This concrete new anode block will last another three weeks, before again it will be replaced by a new anode block. One day after removing the first anode block 4 and measuring the cathode wear in the respective segment 21, another regularly corroded anode block 4 is removed and replaced by a new one. Again, using this opportunity of the melt being uncovered in the segment 21 of the removed anode block 4, the cathode surface in this segment 21 is measured as described before.

In this way, in the course of three weeks, a conventional aluminium electrolysis cell having 20 anode blocks 4, the whole cathode surface of the cell is measured. Thus, during normal replacing work of the cell, easily the complete wear profile 22 (as suggested in Fig. 1a in cross-section) of the cell can be determined accurately without shutting down the cell. For even faster determination during normal work of the cell, only half of anode blocks are removed and thus half the wear profile is determined, determining the wear profile 22 of the whole cell by extrapolating measurements to those segments 21 not yet measured.

Alternatively, all anode blocks 4 are removed within one series of measurements to obtain a wear profile 22 immediately. This is especially done in a variation of the invention with the cell being shut down and all of the melt including aluminium and electrolyte being removed. In this state with the cell being cooled down, it furthermore is not necessary to attach the light pen to a lance, but one can use an end of the light pen as the end which is considered as the respective measured point of the surface of the cathode.

## Claims

1. Apparatus (10) for determining surface profiles, in particular the cathode wear profile (22) and the side ledge(s) profile, of an aluminium electrolysis cell, which is filled with an aluminium melt (5) and has side ledge(s) (6a), comprising
- a position determining system with a mobile system member (11) and a stationary system member (14) and
- a lance (16) with a heat resistant lance tip (19) for immersing into the melt (5) or the side ledge (6a) of the cell,
the mobile member (11) being attached to the lance (16) and the stationary member (14) being adapted for determining a position of the lance tip (19) by determining a position of the mobile member (11).

2. Apparatus according to claim 1, **characterized in that** the lance tip (19) comprises or is at least essentially made of a material which can withstand higher temperatures than a shaft (15) of the lance (16) or at least the same temperatures as the shaft (15).

3. Apparatus according to at least one of the preceding claims, **characterized in that** the shaft (15) comprises or is at least essentially made of steel, preferably stainless steel, graphite-based material or carbon-fiber reinforced material.

4. Apparatus according to at least one of the preceding claims, **characterized in that** the lance tip (19) comprises or is at least essentially made of steel, preferably stainless steel, or a graphite-based product.

5. Apparatus according to claim 4, **characterized in that** the graphite-based product comprises at least one material of the group consisting of carbon, graphite, semi-graphite, carbon-fiber reinforced ceramic or carbon-fiber reinforced carbon.

6. Apparatus according to at least one of the preceding claims, **characterized in that** the lance tip (19) comprises a ball end (20).

7. Apparatus according to at least one of the preceding claims, **characterized in that** the shaft (15) and/or the lance tip (19) comprises a pipe.

8. Apparatus according to at least one of the preceding claims, **characterized in that** the mobile member (11) is attached reversible to the lance (16).

9. Apparatus according to at least one of the preceding claims, **characterized in that** the position determining system is adapted to determine the position of the lance tip (19) and/or ball end (20) by determining positions of reference points (12) on the mobile member (11) and calculating the position of the lance tip (19) and/or ball end (20) on the basis of the positions of the reference points (12).

10. Apparatus according to at least one of the preceding claims, **characterized in that** the stationary member (14) and the mobile member (11) are adapted to determine the position of the reference points (12) with the help of optical means.

11. Method for determining surface profiles, in particular the cathode wear profile (22) and the side ledge(s) profile, in an aluminium electrolysis cell by employing an apparatus (10) according to any of claims 1 to 10, immersing the lance tip (19) of the apparatus (1) into the aluminium melt (5) or the side ledge(s) (6a) of the cell and determining the position of the lance tip (19) as the height of the cathode (1) or the height of the side ledge (6a) at this position in the cell.

12. Method according to claim 11, **characterized in** removing an anode block (4) covering a segment (21) of the cell to be measured before immersing the lance tip (19) into the cell.

13. Method according to claim 12, **characterized in** removing several anode blocks (4) and measuring the respective segments (21).

14. Method according to claim 13, **characterized in** determining a wear profile (22) of the cathode (1) by providing the measurements of the single segments (21) to one complete cell profile (22).

15. Method according to claim 13 or 14, **characterized in that** only some segments (21) of the cell are measured and the profile (22) of the complete cell is determined by extrapolating the residual segments (21).

## Patentansprüche

1. Vorrichtung (10) zum Bestimmen von Oberflächenprofilen, insbesondere dem Kathodenverschleißprofil (22) und dem Seitenkantenprofil, einer Aluminiumelektrolysezelle, die mit einer Aluminiumschmelze (5) gefüllt ist und eine Seitenkante(n) (6a) aufweist, umfassend:
- ein Positionsbestimmungssystem mit einem beweglichen Systemelement (11) und einem unbeweglichen Systemelement (14) und
- eine Lanze (16) mit einem wärmebeständigen Lanzenkopf (19) zum Eintauchen in die Schmelze (5) oder die Seitenkante (6a) der Zelle,
wobei das bewegliche Element (11) an der Lanze (16) befestigt ist und das unbewegliche Element (14) zum Bestimmen einer Position des Lanzenkopfs (19) durch Bestimmen einer Position des beweglichen Elements (11) angepasst ist.

2. Vorrichtung nach Anspruch 1, **dadurch gekennzeichnet, dass** der Lanzenkopf (19) ein Material umfasst oder wenigstens hauptsächlich aus einem Material hergestellt ist, das höheren Temperaturen, als ein Schaft (15) der Lanze (16) oder wenigstens denselben Temperaturen wie der Schaft (15) widerstehen kann.

3. Vorrichtung nach wenigstens einem der vorhergehenden Ansprüche, **dadurch gekennzeichnet, dass** der Schaft (15) Stahl enthält oder wenigstens hauptsächlich aus diesem hergestellt ist, vorzugsweise rostfreien Stahl, Material auf Basis von Graphit oder Kohlenstofffaser-verstärktes Material.

4. Vorrichtung nach wenigstens einem der vorhergehenden Ansprüche, **dadurch gekennzeichnet, dass** der Lanzenkopf (19) Stahl enthält oder wenigstens hauptsächlich aus diesem hergestellt ist, vorzugsweise rostfreien Stahl oder ein Erzeugnis auf Basis von Graphit.

5. Vorrichtung nach Anspruch 4, **dadurch gekennzeichnet, dass** das Erzeugnis auf Basis von Graphit, ein Material der Gruppe, bestehend aus Kohlenstoff, Graphit, Halb-Graphit, Kohlenstofffaserverstärkter Keramik und/oder Kohlenstofffaserverstärktem Kohlenstoff, umfasst.

6. Vorrichtung nach wenigstens einem der vorhergehenden Ansprüche, **dadurch gekennzeichnet, dass** der Lanzenkopf (19) einen Kugelkopf (20) umfasst.

7. Vorrichtung nach wenigstens einem der vorhergehenden Ansprüche, **dadurch gekennzeichnet, dass** der Schaft (15) und/oder der Lanzenkopf (19) ein Rohr umfassen.

8. Vorrichtung nach wenigstens einem der vorhergehenden Ansprüche, **dadurch gekennzeichnet, dass** das bewegliche Element (11) umkehrbar an der Lanze (16) befestigt ist.

9. Vorrichtung nach wenigstens einem der vorhergehenden Ansprüche, **dadurch gekennzeichnet, dass** das Positionsbestimmungssystem angepasst ist, die Position des Lanzenkopfs (19) und/oder Kugelkopfs (20) durch Bestimmen von Positionen von Referenzpunkten (12) auf dem beweglichen Element (11) zu bestimmen und die Position des Lanzenkopfs (19) und/oder Kugelkopfs (20) auf Basis der Positionen der Referenzpunkte (12) zu berechnen.

10. Vorrichtung nach wenigstens einem der vorhergehenden Ansprüche, **dadurch gekennzeichnet, dass** das unbewegliche Element (14) und das bewegliche Element (11) angepasst sind, die Position der Referenzpunkte (12) mit der Hilfe von optischen Mitteln zu bestimmen.

11. Verfahren zum Bestimmen von Oberflächenprofilen, insbesondere dem Kathodenverschleißprofil (22) und dem Seitenkantenprofil, in einer Aluminiumelektrolysezelle durch Einsetzen der Vorrichtung (10) nach einem der Ansprüche 1 bis 10, durch Eintauchen des Lanzenkopfs (19) der Vorrichtung (10) in die Aluminiumschmelze (5) oder die Seitenkante(n) (6a) der Zelle und durch Bestimmen der Position des Lanzenkopfs (19) als die Höhe der Kathode (1) oder die Höhe der Seitenkante (6a) an dieser Position in der Zelle.

12. Verfahren nach Anspruch 11, **gekennzeichnet durch** Entfernen eines Anodenblocks (4), der ein Segment (21) der zu messenden Zeile verdeckt, vor dem Eintauchen des Lanzenkopfs (19) in die Zelle.

13. Verfahren nach Anspruch 12, **gekennzeichnet durch** Entfernen mehrerer Anodenblöcke (4) und durch Messen der entsprechenden Segmente (21).

14. Verfahren nach Anspruch 13, **gekennzeichnet durch** Bestimmen eines Verschleißprofils (22) der Kathode (1) durch Bereitstellen von Messungen der einzelnen Segmente (21) für ein gesamtes Zellenprofil (22).

15. Verfahren nach Anspruch 13 oder 14, **dadurch gekennzeichnet, dass** nur einige Segmente (21) der Zelle gemessen werden und das Profil (22) der gesamten Zelle durch Extrapolieren der restlichen Segmente (21) bestimmt wird.

## Revendications

1. Appareil (10) de détermination de profils de surface, en particulier le profil d'usure de cathode (22) et le profil d'un ou de rebords latéraux, d'une cellule d'électrolyse en aluminium, qui est remplie d'une matière fondue d'aluminium (5) et a un ou des rebords latéraux (6a), comprenant
- un système de détermination de position avec un organe de système mobile (11) et un organe de système immobile (14) et
- une lance (16) avec un bout de lance thermorésistant (19) pour une immersion dans la matière fondue (5) ou le rebord latéral (6a) de la cellule,
l'organe mobile (11) étant attaché à la lance (16) et l'organe immobile (14) étant adapté pour déterminer une position du bout de lance (19) par détermination d'une position de l'organe mobile (11).

2. Appareil selon la revendication 1, **caractérisé en ce que** le bout de lance (19) comprend ou est au moins essentiellement réalisé en un matériau qui peut supporter des températures plus élevées qu'un manche (15) de la lance (16) ou au moins les mêmes températures que le manche (15).

3. Appareil selon au moins l'une des revendications précédentes, **caractérisé en ce que** le manche (15) comprend ou est au moins essentiellement réalisé en acier, de préférence un acier inoxydable, un matériau à base de graphite ou un matériau renforcé de fibres de carbone.

4. Appareil selon au moins l'une des revendications précédentes, **caractérisé en ce que** le bout de lance (19) comprend ou est au moins essentiellement réalisé en acier, de préférence un acier inoxydable, ou un produit à base de graphite.

5. Appareil selon la revendication 4, **caractérisé en ce que** le produit à base de graphite comprend au moins un matériau du groupe consistant en le carbone, le graphite, le semi-graphite, une céramique renforcée de fibres de carbone ou le carbone renforcé de fibres de carbone.

6. Appareil selon au moins l'une des revendications précédentes, **caractérisé en ce que** le bout de lance (19) comprend une extrémité à bille (20).

7. Appareil selon au moins l'une des revendications précédentes, **caractérisé en ce que** le manche (15) et/ou le bout de lance (19) comprennent un tuyau.

8. Appareil selon au moins l'une des revendications précédentes, **caractérisé en ce que** l'organe mobile (11) est attaché réversible à la lance (16).

9. Appareil selon au moins l'une des revendications précédentes, **caractérisé en ce que** le système de détermination de position est adapté pour déterminer la position du bout de lance (19) et/ou de l'extrémité à bille (20) par la détermination de positions de points de référence (12) sur l'organe mobile (11) et le calcul de la position du bout de lance (19) et/ou de l'extrémité à bille (20) sur la base des positions des points de référence (12).

10. Appareil selon au moins l'une des revendications précédentes, **caractérisé en ce que** l'organe immobile (14) et l'organe mobile (11) sont adaptés pour déterminer la position des points de référence (12) à l'aide d'un moyen optique.

11. Procédé de détermination de profils de surface, en particulier le profil d'usure de cathode (22) et le profil d'un ou de rebords latéraux, dans une cellule d'électrolyse en aluminium par l'emploi d'un appareil (10) selon l'une quelconque des revendications 1 à 10, l'immersion du bout de lance (19) de l'appareil (1) dans la matière fondue d'aluminium (5) ou le ou les rebords latéraux (6a) de la cellule et la détermination de la position du bout de lance (19) en tant que hauteur de la cathode (1) ou hauteur du rebord latéral (6a) à cette position dans la cellule.

12. Procédé selon la revendication 11, **caractérisé par** l'enlèvement d'un bloc d'anode (4) couvrant un segment (21) de la cellule à mesurer avant l'immersion du bout de lance (19) dans la cellule.

13. Procédé selon la revendication 12, **caractérisé par** l'enlèvement de plusieurs blocs d'anode (4) et la mesure des segments (21) respectifs.

14. Procédé selon la revendication 13, **caractérisé par** la détermination d'un profil d'usure (22) de la cathode (1) par la fourniture des mesures des segments (21) uniques à un profil de cellule complète (22).

15. Procédé selon la revendication 13 ou 14, **caractérisé en ce qu'**uniquement certains segments (21) de la cellule sont mesurés et le profil (22) de la cellule complète est déterminé par l'extrapolation des segments résiduels (21).
